# EUROPEAN PATENT APPLICATION

(11) **EP 1 944 673 A2**
(43) Date of publication of application: **16.07.2008**
(21) Application number: 07024371.2
(22) Date of filing: 17.12.2007
(51) Int. Cl.: G05D 23/275

(54) **An improved regulating thermostat**

(30) Priority: 21.12.2006 IT MI20060455
(71) Applicant: T&G spa, 24040 Burago molgora (MI) (IT)
(72) Inventor: Ronchi, Virginio, 24040 Burago Molgora (MI) (IT)
(74) Representative: Kratter, Carlo

(57) **Abstract**

A regulating thermostat comprising a thermometric probe (1), a conversion device (8) able to transform the signal of the thermometric probe into a movement of a wall (9), a transmission element (10) able to transmit the axial displacements of said wall to a switch (11) having two operative states and a regulating device (13) to regulate a pre-set temperature; wherein said switch (11) is a micro-switch, and wherein said transmission element (10) is so shaped as to amplify the action exerted by said wall (9) to a predetermined value able to actuate said micro-switch, when said probe measures said pre-set temperature to return elastically to its initial position as said measured temperature decreases.

## Description

The present invention relates to a regulating thermostat of the type indicated in the precharacterising part of the main claim.

Known thermostats of the kind indicated above generally require relatively complicated assembly work and are relatively bulky. Known thermostats, for example, comprise a metallic part able to house the conversion device, and the device for regulating the pre-set temperature for the activation of the thermostat and a part made of plastic material, able to house the switch and two of the electric terminals. This type of solution complicates the assembly of the thermostat and prolongs the time required for its production and impacts unfavourably on the final costs of the product. Moreover, in known thermostats the electric terminals project from the thermostat body from different walls, which limits the possibilities of final installation of the thermostat to a limited series of positions.Similar limitations entail also the particular positioning of the elements for fastening the thermostat, which in known thermostats are situated on a shelf external to the body of the thermostat and arranged perpendicularly to the longitudinal axis of said body.

Particularly complicated, bulky and difficult to construct is, in known thermostats, also the conformation of the switch.

An additional drawback of known thermostats is linked to the fact that a considerable displacement of the membrane of the conversion device is required to activate the switch, which entails the need to provide a thermometric probe with a bulb of adequate dimensions, which has to be made of a relatively expensive material, e.g. copper, and hence has a significant impact on the total costs of construction of the thermostat.

An object of the present innovation is to simplify the conformation and the arrangement of the components of known thermostats, to reduce the time and costs required to produce and assemble said components and more in general the thermostat itself, and at the same time to facilitate and make more versatile securing the thermostats to the devices whereto they are to be associated.

An additional object is to provide a thermostat that allows to use thermometric probes with bulbs of smaller size than those usually employed.

These and other objects that will be readily apparent to those skilled in the art are achieved by a thermostat in accordance with the characterising part of the appended claims.

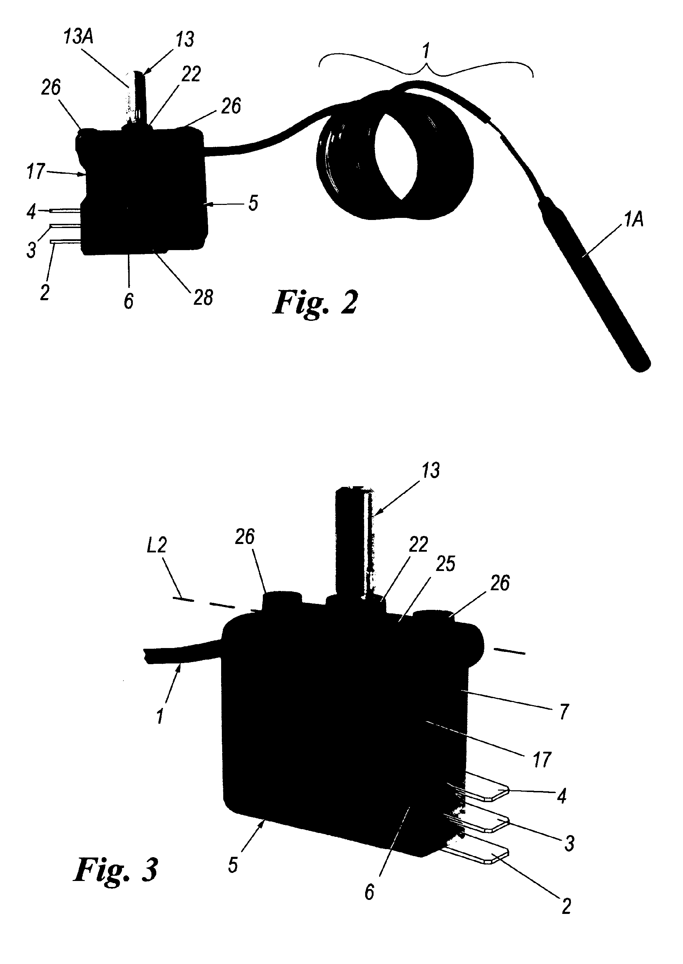

For a better understanding of the present innovation, drawings are provided by way of non limiting example, in which:
fig. 1 shows a schematic, partial perspective view of a thermostat according to the invention, partially disassembled,
fig. 2 and 3 show, respectively, a perspective schematic view according to two different angles,
fig.4 shows a view like the one in fig. 1 of a first embodiment, fig. 5 show a longitudinal section view and a top view of a component of fig. 4.
With reference to the aforementioned figures, they show a regulating thermostat of the type able to connect, when a thermometric probe 1 measures a pre-determined temperature, a first electric terminal 2, normally connected to a second terminal 3, with a third terminal 4, of a control circuit (not shown). The thermostat comprises a box body 5, formed by a first part 6 able to house all the components of the thermostat and by a lid 7 (fig. 3). The first part 6 houses within it: a portion of the terminals 2-4, a conversion device 8, connected to the thermometric probe 1 and able to transform the signal of the thermometric probe into an axial movement of a membrane or wall 9, able to move along an axis L1 with variations in the temperature, measured by the bulb 1A of said probe 1 connected through a tube 1B to said device 8, a transmission element 10 able to transmit and amplify the axial movements of said wall 9 to a switch 11 presenting two operative states. In a first operative state, the switch 11 mutually connects the first terminal 2 and the second terminal 4, in a second state the first terminal 2 with the third one 3, said switch normally being in said first operative state and being able to shift to said second state under the action of said transmission element 10 when the probe 1 measures a pre-determined temperature that entails a predetermined displacement of the wall 9 of the conversion device 8 and consequently a predetermined pressure of said transmission device 10 on a pushbutton 11 A of said switch 11. It should be noted that as the aforesaid action of the transmission element 10 on the push-button 11 A ceases, the switch 11 automatically returns to the first operative position.

The part 6 of the body 5 of the thermostat partially houses a device 13 for regulating the thermostat, rotating a pivot pin 13 A of said device 13 (to the pivot pin is usually fastened a knob, not shown) the user of the thermostat can set the temperature that, once it is measured by the bulb 1 A of the probe 1 will cause a displacement of the membrane 9 of the conversion device and consequently a displacement of the transmission element 10, such as to activate the pushbutton 11 A of the switch 11.

The thermometric probe 1, the regulating device 13 and the switch 11 are conventional for those skilled in the art and will therefore not be described in detail hereafter.

However, it should be noted that the thermometric probe as shall become readily apparent hereafter has a bulb with smaller dimensions than traditional bulbs for this type of thermostats, entailing a saving of materials for its construction, and consequently on the total costs of production of the thermostat.

The switch is of a commercial type and it is preferably a micro-switch, e.g. of the type D45Y produced by the company "Cherry". As used herein, the term "micro-switch" means an electrical component comprising electric terminals (which coincide with the terminals 2-4 of the thermostat), an inner circuit and a connecting push-button 11 A that has a maximum operative travel (differential displacement) of no more than 0.6 mm, preferably equal to 0.3 mm, and a limited activation force.

The dimensions of the micro-switch are small; its length R1 is less than or equal to 40 mm, preferably about 30 mm, its height R2 is less than or equal to 30 mm, preferably equal to about 16 mm, its thickness it less than or equal to 20 mm, preferably equal to about 10.5 mm.

Advantageously, the electric terminals 2-4 of the thermostat are a component of the micro-switch, i.e. they are not separated therefrom and therefore they do not need operations to be connected to the micro-switch itself, thereby further simplifying the assembly of the thermostat.

The part 6 of the body 5 of the thermostat has a seat 25 able to house the micro-switch 11 in a stable and precise manner, and so shaped as to prevent any displacement of the micro-switch itself, which would compromise its proper operation.

The three electric terminals are housed in three superposed seats 19 A-C, parallel and equidistant and all provided in a same lateral wall 17 of the part 6 of the body 5 of the thermostat. It should be stressed that the base wall 28 of the part 6 of the body 5 of the thermostat has a slit 19D able to serve as an extension of the seat 19C for the lower terminal 2 and thereby assure an optimal and reliable positioning both of said terminal and of the micro-switch 11.

Thanks to this arrangement of the terminals, all grouped and projecting from a same wall 17 of the body 5 of the thermostat, the latter can be secured to the device whereto it has to be associated in a plurality of different positions, all able to enable easily to access the terminals 2-4.

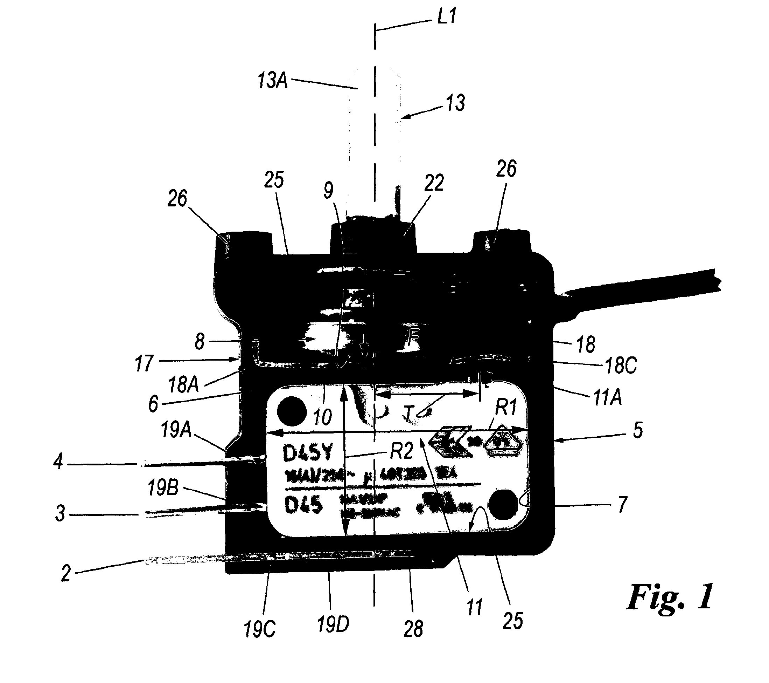

The transmission element 10, able to transmit the action of the membrane 9 to the push-button 11A of the micro-switch 11, has a lever 18 able to amplify said action, i.e. the force F (fig. 1) exerted by the membrane 9 on a central part of said lever and the related downward displacement of said membrane. The lever 18 is shaped as a trampoline spring and it has one of its ends 18 A rigidly fastened in a seat 21 of the wall 17 of the thermostat body, its central part 18 B whereon acts the membrane 9 and its free extreme part 18 C, distanced by a segment T from said central part 18 B, able to act on the push-button 11 A of the micro-switch 11. The lever 18 thrust by the force F exerted centrally by the membrane is lowered, but its free end 18 C, because of the way the lever is shaped, undergoes a greater downwards displacement than the central part of the lever and at the same time exerts on the push-button 11A an amplified action with respect to the one exerted by the membrane 9. As the temperature measured by the probe decreases, and consequently the action of the membrane 9 on the lever 18 ceases, the lever 18 elastically returns to its initial position in which its free end 18 C bears on the push-button, but does not actuate it.
It has been observed experimentally that the limited displacements of the membranes, if appropriately amplified by a transmission element 10 of the type described are able to actuate a micro-switch.

Advantageously, to improve contact between the free end 18C of the lever 18 and the push-button 11A, said end is slightly raised relative to the central part 18B of the lever.

Thanks to the particular conformation of the transmission element 10 and in particular of its effect of amplifying the action of the membrane 9, the thermostat according to the innovation requires, for its operation, a smaller bulb 1 of the thermometric probe 1 than the bulbs traditionally used in known thermostats.

The lever 18 of the transmission element 10, in addition to amplifying the dilation of the membrane 9, is also able always to maintain said membrane, and more in general the entire conversion device 8, in the correct calibration position, in particular when the membrane withdraws as a result of a drop in the temperature measured by the probe 1. In known thermostats, the membrane is maintained in the correct calibration position by means of a helical spring dedicated to this function, which in the device according to the invention can be omitted, with obvious simplifications in the construction and assembly of the thermostat.

According to the innovation, from the wall 25 of the body 5 of the thermostat from which branches off a portion 22 that partially houses the pivot pin 13 A of the regulating device 13, also branch off the conventional means 26 able to allow to fasten the thermostat to complementary means of a device whereto the thermostat is to be connected.
The means 26 are advantageously constructed in a single piece with the part 6 of the body 5, by moulding, they are positioned in such a way as to be substantially aligned along a longitudinal axis L2 (fig. 3) with the projecting portion 22 and they are shaped as internally threaded tubular elements.

It should be stressed that the concentration of all the components of the thermostat in a single part 6 of the thermostat body 5 simplifies and speeds up the assembly, because all its components are grouped in a single housing.

It should be noted that the use of a commercial micro-switch as the switching device, instead of the switches with metallic reeds employed heretofore in devices of this kind greatly simplifies the operations required for the construction and the assembly of these components and has a significant impact on total production times and costs.

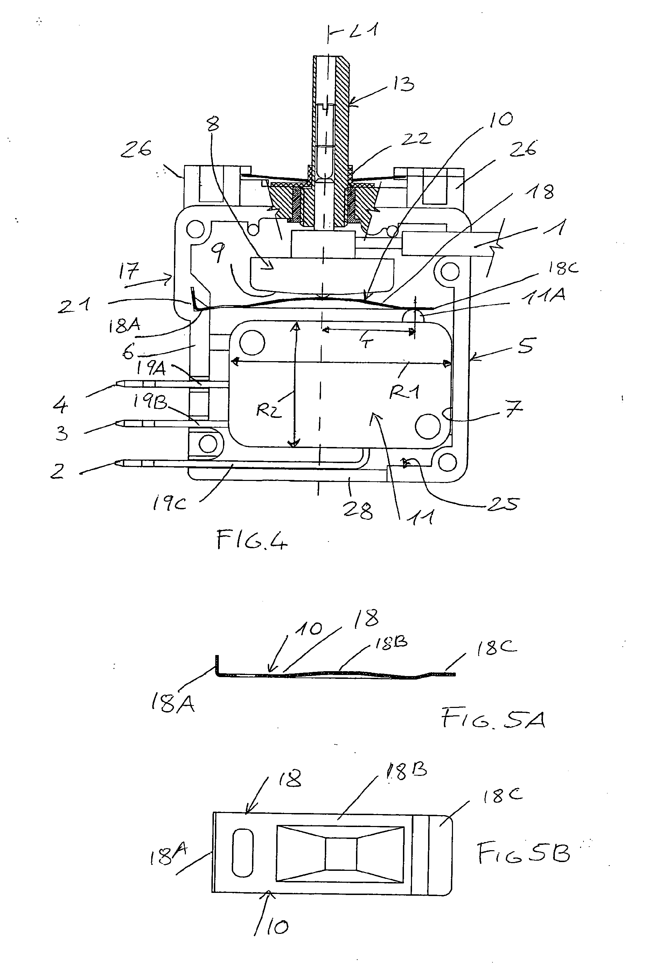

Lastly, it should be repeated that the embodiment illustrated above is provided purely by way of example and that numerous variants are possible within the same innovative concept, so that for example the thermostat may lack the terminal 3, normally connected to the terminal 2 and hence operate as an on/off thermostat, in which latter case instead of a micro-switch with three terminals 2,3,4, a micro-switch with two terminals 2 and 4 would be used. Figures 4 and 5A and 5B show additional possible variants in which the parts shared with the embodiment described above are indicated with the same numbers and will not be described further. In this variant, the end 18 A of the lever 18 of the transmission element 10 and its seat 21 into which said end is inserted are shaped such as to pre-load the lever itself which thus, when the components of the device are assembled, is able to exert centrally on the face 9 of the conversion device 8 an upwards-directed force of a pre-set value, able to maintain said device 8 in the correct position. Moreover, the central part 18B of the lever 18 is appropriately deformed by bending, in such a way as to create a strengthened, stiffer central part. Said deformation preferably has a pyramid frustum shape, open in the lower part of the lever.

## Claims

1. A regulating thermostat of the type able to connect, upon the measurement of a pre-set temperature by a thermometric probe (1), a first electric terminal (2) with at least a second terminal (4); comprising a box body (5), formed by at least two parts (6, 7) that are fastened to each other such as to form said body and able to house within them: at least one portion of said terminals (2-4), a conversion device (8) connected to said thermometric probe (1) and able to transform the signal of the thermometric probe into a movement of a wall (9) able to displace along an axis (L1) as the temperature measured by said probe changes, a transmission element (10) able to transmit the axial displacement of said wall to a switch (11) having two operative states: in a first state being able mutually to connect said first terminal (2) to said second terminal (4), and in the second state to open the electrical connection between said first and second terminal, said switch being normally in said second state and being able to move into said first state under the action of said transmission element (10) when the probe measures a pre-set temperature that entails a predetermined displacement of the wall (9) of said conversion device (8) and consequently a predetermined action of said transmission element (10) on said switch (11), and a regulating device (13), at least partially housed in said body, to select said predetermined temperature; **characterised in that**: said switch (11) is a micro-switch, and that said transmission element (10) is so shaped as to amplify the action exerted by said wall (9) in such a way as to actuate a push-button (11 A) of said micro-switch, when said probe (1) measures said predetermined temperature, thereby making it pass from said second state to said first state, and to be so shaped as to return elastically to its initial position as said predetermined temperature decreases, thereby deactivating said push-button (11A) and to make said micro-switch pass from said first state to the second.

2. Thermostat as claimed in claim 1
**characterised in that** said transmission element (10) is so shaped as always to maintain the conversion device (8) in the correct calibration position, in particular when it withdraws as a result of a drop in the temperature measured by the probe (1).

3. Thermostat as claimed in claim 1 or 2
**characterised in that** the transmission element (10) is shaped as an elastic lever (18), rigidly fastened at one of its ends (18A) to the body (6, 5) of said thermostat and presenting its other end (18C) free and co-operating with the push-button (11A) of the micro-switch, said lever presenting a central part in contact with the wall (9) of the connecting device (8).

4. Thermostat as claimed in claim 1,
**characterised in that** the transmission element (10) is so shaped as to amplify the displacement exerted by the wall (9) of the conversion device (8) to a value that is lower than or equal to 0.6 mm, preferably equal to 0.3 mm.

5. Thermostat as claimed in claim 1
**characterised in that** the push-button (11 A) of the micro-switch has a maximum operative travel smaller than or equal to 0.6 mm, preferably equal to 0.3 mm.

6. Thermostat as claimed in claim 1
**characterised in that** the electric terminals (2-4) are a component of the micro-switch.

7. Thermostat as claimed in claim 1,
**characterised in that** the body (5) of the thermostat comprises a seat (25) able to house the micro-switch (11) in a stable and precise manner, so shaped as to prevent any displacement of said micro-switch.

8. Thermostat as claimed in claim 1
**characterised in that** it comprises a third electric terminal (3) connected to the first (2) only when the reed element (11) is in its second operative position (A).

9. Thermostat as claimed in claim 1 or 8
**characterised in that** all the electric terminals (2-4) project externally from a same wall (17) of the body (5) of the thermostat.

10. Thermostat as claimed in claim 1
**characterised in that** a base wall (28) of the body (5) of the thermostat comprises a slit (19D) able to serve as an extension of a seat (19C), provided in a lateral wall (17) branches off from said base, for a lower electric terminal (2).

11. Thermostat as claimed in claim 1,
**characterised in that** from an outer face of a wall (25) of the body (5) wherefrom branches off a portion (22) that partially houses a pivot pin (13 A) of the regulating device (13), branch off also means (26) able to allow to fasten the thermostat to complementary means of a device whereto the thermostat is to be connected, said means (26) being obtained in a single piece with the part (6) of the body (5), by moulding, and being positioned in such a way as to be substantially aligned along a longitudinal axis (L2) of said body and with said projecting portion (22).

12. Thermostat as claimed in claim 1
**characterised in that** all the components are housed in a plurality of seats provided in a single first part (6) of the body (5) the other part being shaped as a closing lid of said first part and that said body comprises only said two parts.
